(19)

Europäisches
Patentamt
European
Patent Office
Office européen
des brevets

(11) **EP 2 071 776 B1**

(12) **EUROPEAN PATENT SPECIFICATION**

(45) Date of publication and mention
of the grant of the patent:
**13.01.2010 Bulletin 2010/02**

(51) Int Cl.:
*H04L 12/56* (2006.01)

(21) Application number: **07291413.8**

(22) Date of filing: **27.11.2007**

(54) **Method for routing data traffic in a network**

Verfahren zum Routing von Datenverkehr in einem Netzwerk

Procédé de routage de trafic de données sur un réseau

(84) Designated Contracting States:
**AT BE BG CH CY CZ DE DK EE ES FI FR GB GR
HU IE IS IT LI LT LU LV MC MT NL PL PT RO SE
SI SK TR**

(74) Representative: **Schmidt, Werner Karl et al
Alcatel-Lucent
Intellectual Property & Corporate Standards
70430 Stuttgart (DE)**

(43) Date of publication of application:
**17.06.2009 Bulletin 2009/25**

(73) Proprietor: **Alcatel Lucent
75008 Paris (FR)**

(72) Inventor: **Ulrich Gebhard
70806 Kornwestheim (DE)**

(56) References cited:
**EP-A- 0 631 413      WO-A-2007/025853**

• **KOUSHIK KAR ET AL: "Minimum Interference
Routing of Bandwidth Guaranteed Tunnels with
MPLS Traffic Engineering Applications" IEEE
JOURNAL ON SELECTED AREAS IN
COMMUNICATIONS, IEEE SERVICE CENTER,
PISCATAWAY, US, vol. 18, no. 12, December 2000
(2000-12), XP011055282 ISSN: 0733-8716**

**Description**

Background of the invention

The invention relates to a method for routing data traffic in a network comprising a plurality of nodes and a plurality of network links that extend between adjacent ones of said nodes, wherein the data traffic (load) is resulting from a plurality of communication requests between pairs of said nodes referred to as terminal nodes (Peers), the terminal nodes being connected by paths, each path being defined by a set of adjacent network links.

Optimization of network resources is an issue for all network providers and their equipment manufacturers. The concept of multilayer optimization including both underlying (physical network) and overlay networks (logical network) is getting more and more important. Therefore, routing algorithms to concentrate data traffic in a network in overlaying buses are required.

In WO 2007/025853 A1 a method is disclosed wherein weighting values of network links are calculated in order to avoid link congestion by distributing paths across different links.

In EP1684472A1 a routing algorithm and heuristics for bus allocation is proposed. This algorithm extends Shortest Path First (SPF) routes on which data traffic in a network is to be routed one node at a time in order to absorb other routes to create an overlaying bus, i.e. a route on which data traffic is concentrated. Starting from a demand matrix for which the SPF routes are determined by executing e.g. the Dijkstra algorithm the longest route is taken and its path extended across neighbouring nodes to absorb as many other SPF routes as possible. Individual OSPF routes are stretched whenever the network topology offers triangular node constellations. The original route is detoured in order to absorb other routes which can be mapped to its path.

The latter routing algorithm is based on extending a route one node at time. This method requires a high degree of meshing, it is not suitable for e.g. networks with ring topology due to lack of triangular node constellations.

The routing algorithm cannot change previous steps of iteration. Once a bus is defined it will absorb others sharing the same path and restrict the possibilities of the remaining routes to be grouped in an efficient way. It is possible for instance, that the longest route is a route at the edge of the network which is far from the center of the network and it will be the first bus to be defined, stretched and absorbing other routes while it could be better to start with a shorter route in the center of the network to determine the first bus.

According to the known routing algorithm certain links cannot be favored, e.g. to extend data traffic on links having high data transmission rates. It only works on a single layer, not reflecting preferences of the lower layer, e.g. the physical network. It cannot consider the load of a certain link and spends any effort in order to absorb another route.

Object of the invention

It is therefore an object of the invention to provide a method for routing data traffic in a network, which overcomes the problems associated with the related art, in particular which enables to find a multiaccess overlay topology, i.e. bus topology, on top of a Point to Point (P2P) network with the target to minimize resources.

Short description of the invention

This object is achieved, in accordance with the invention, by the method according to claim 1.

The inventive method for routing data traffic in a network comprising a plurality of nodes and a plurality of network links that extend between adjacent ones of said nodes, wherein the data traffic is resulting from a plurality of communication requests between pairs of said nodes referred to as terminal nodes, the terminal nodes being connected by paths, each path being defined by a set of adjacent network links, is comprising the following steps:

a) Assigning a weighting value to each of said network links. E.g. the weighting value is chosen in a way that the smaller the weighting value, the more the respective network link is favoured to be part of an initial path.
b) Selecting the initial path connecting said pairs of terminal nodes for each communication request.
c) Selecting a routing path and
d) Routing at least part of said traffic on said routing path.

The routing path is selected by performing the steps of:

ca) Determining the initial paths which are comprising a specific network link of said network links.
cb) Adjusting, preferably decrementing, the weighting value of said specific network link as a function of the number of said initial paths comprising the specific network link and/or of the load caused by said paths on said specific network link. The load caused by a path may be defined by the amount of data transmitted over the path in a period of time. So paths may be weighted, e.g. a path contributing twice as much load on the specific link may be weighted as much as two paths.

cc) Selecting the routing path as the shortest path connecting the pair of terminal nodes of at least one selected communication request of said communication requests, wherein the length of the network links being part of the routing path is being weighted by its weighting value.

In short terms, the inventive method finds a route, i.e. said routing path, for routing data traffic through a network wherein routes are concentrated along few network paths, wherein the steps of assigning a weight to each network link, selecting among different potential paths the one with the lowest sum of weights and decrementing the weight of each link along the path selected for the route are performed.

In step cb) the weighting value is adjusted by assigning a new weighting value which is a function of the said number of paths comprising the specific network link and/or of the load the said number of paths cause on the specific network link as the weighting value of the specific network link. The new weighting value is calculated in such a way that the sum of the loads of said number of paths contributing on the specific link is calculated, an initialization value of the specific network link is added to the sum and the reciprocal value of the sum is assigned as the new weighting value. The initialization value preferably is defined by the reciprocal value of the weighting value assigned to the path in step a). Therefore, the routing path can be selected automatically and the resulting routing path reflects existing load on the path or at least reflects the load to be expected on the path.

The inventive method is based on the idea to assign a weight being calculated from an initialisation value to each link. The weight is decremented to a new weight by each Open Shortest Path First (OSPF) route that traverses the link, e.g. by incrementing the initialisation value by 1 and calculating the new weight as the reciprocal value of the initialisation value. At each iteration step the shortest path algorithm computes the path with the lowest weight, then changes all weights in such a way that they reflect the new routing situation. Thus, paths traversed by more routes attract again other routes. At each iteration step the optimal routes for all demands are recalculated.

Accordingly, an overlay bus topology on top of a P2P network is created by concentrating multiple individual traffic paths, e.g. OSPF calculated routes, along buses in order to achieve statistical multiplexing benefits and cost savings regarding network and router ports.

The inventive method is leading to a concept for designing a bus topology over P2P transport networks by performing a Metric Adaptive Bus Evolution (MABE). Therefore, an optimization of the design of all P2P networks, especially optical networks, is made possible.

The inventive method has the following advantages:

- it is applicable to all kinds of P2P networks including meshed topologies, ring topologies and multilayer environments. It leads to a bus optimization in any kind of data transmitting network.
- In ring networks a high concentration of routes is achieved.
- The inventive method is designed for multilayer environments. The weight, i.e. the weighting value, of a link can be a function of the weight of the lower layer path thus reflecting preferences of the lower layer.
- It uses standard routing algorithms.
- The inventive method is designed for bus optimization. It can consider the number of routes per link and even their loads and it avoids excessive detouring of routes. A route is only extended if the new path is more efficient with regards to network recourses.
- The underlying algorithm of the inventive method can adapt the conditions with every evolution step, i.e. it can change conditions of previous steps of iteration.
- The inventive method allows to force the algorithm to either exclude or favor certain links. Therefore, it is configurable. The operator can control the path of the buses by assigning priorities, i.e. lower weights, to individual links
- it is easy to implement.

Preferred variants of the invention

A particularly preferred variant of the inventive method is **characterized in that** the initial paths connecting said pairs of terminal nodes for each communication request are selected as the shortest path connecting the pair of terminal nodes of each communication request. Therefore the initial paths can be derived automatically, If no preferences for the initial paths have to be defined. Preferably the length of the network links being part of the initial path is being weighted by its weighting value. The weighting value may include or reflect any preference defined for the initial path.

The routing path preferably is selected according to the inventive method by iterating step c). In each iterating step the routing path of the previous iteration is taken as the initial path of the current iteration

Preferably, the iteration is carried out until a predefined number of iteration steps has been executed or until the total number of network links comprised by initial paths has hit a predefined minimum number or until none of the weights of said network links has changed between the previous step of iteration and the current step of iteration.

To optimise a given network by performing the inventive method, step ca) is carried out for each network link of said network links as specific network link and step c) is carried out for each of said communication requests.

To reduce computing time for performing the inventive method in step cd) the shortest path is calculated by using the algorithm of Dijkstra.

Also within the scope of the invention is a computer program product comprising means for performing the inventive method when run and/or stored on a computer system.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

Drawings and detailed description of the invention

The invention is illustrated in the drawings.

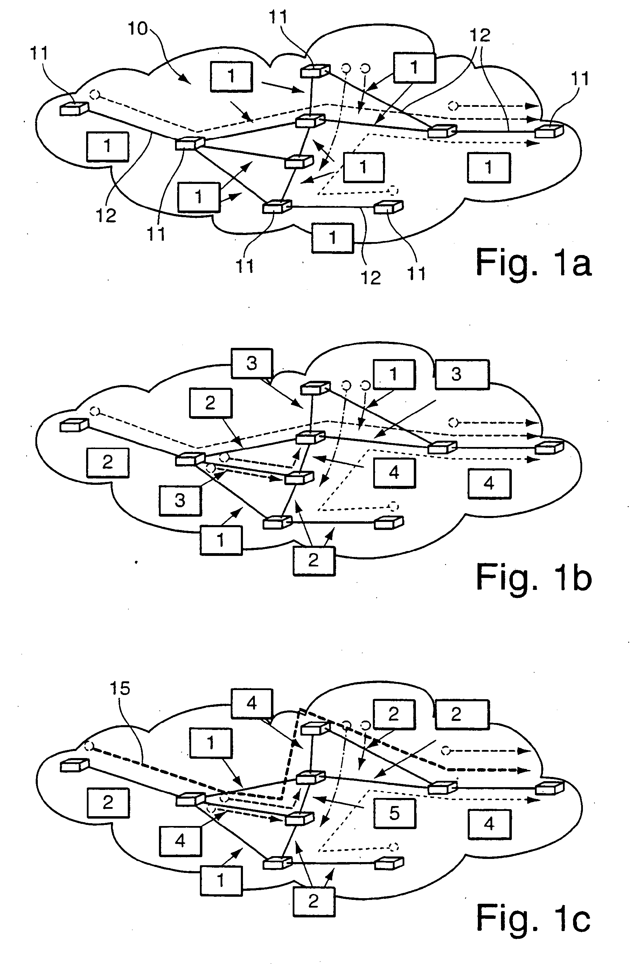

Fig. 1 a to c    illustrate the inventive method by showing different states of the step of selecting routing paths.

As shown in the Figures 1 the inventive method starts from a network 10 with a number n of nodes 11, a number i of links 12 and a matrix of communication requests $r(node_j, node_k.)$, which are shown in the figure as dashed and/or dotted arrows.

For each network link a priority p is allocated as the initialization value of the link, which reflects the potential of said link to attract other routes. Each link is assigned an initial value $p_0$, what is shown in the figure as the numbers written in the small boxes neighboring to the links or being assigned to links by small arrows. The value $p_0$ is converted into the weighting value $w_0 = 1/p_0$ for applying the routing algorithm, e.g. the algorithm of Dijkstra. In case of the example shown in the figure each link has assigned the value 1 as initialization value, i.e. the weighting value assigned to each link also is one. Then for each $r(node_j, node_k)$ the routing algorithm identifying the path with minimum weight through the network is applied. When all routes are available, the priority of each link is incremented by the sum of the priorities of all routes traversing this link, i.e. the new priority p is calculated as:

$$p = p_0(i) + \sum_{s=1}^{z} p_s$$

where $p_0(i)$ denotes the initial priority of link i, z denotes the number of routes traversing this link and $p_s$ denotes the priority increment which route s contributes to the total priority of the link. The priority increment $p_s$ can be a function of the load of route s or it can be constant for all routes. Then the new priority is converted to the new weighting value $w = 1/p$. The links with less weight will be chosen with preference in the next execution of the routing algorithm.

These steps are repeated until as many connection requests can be routed over as few common network paths as possible.

In the following a description in Pseudo Code of the algorithm the inventive method is based on is given:

Let $p_i$ be the priority of a link having an initial value $p_0(i)$ and let $w_i$ be the weight of the link having an initial value $w_0$. Let S be the number of iteration steps, R the number of connection requests and L the number of Point to Point (P2P) links, then:

```
//initalization of the weighting values

For i=1 to L do

        p_i = p_0(i)        //p_0 can be different for different links in order to favor
certain links

        w_i = 1/p_i

Next i

//iteration with weight adaptation

For k=1 to S do

        For m=1 to R do

                path = Dijkstra(r_m ; Σ w_i = min)   //the shortest path is where Σ w_i = min

        Next m

        For i=1 to L do
```

$$p_i = p_0(i) + \sum_{s=1}^{i} p_s$$

```
        w_i = 1/p_i

        Next i

Next k
```

After the above calculation is finished as the result the routing paths for all connection requests are selected and can be grouped into buses.

**Fig. 1a** shows an initial state where all links have their initial priority $p_0 = 1$. The results of the first execution of the Dijkstra algorithm on all $r(node_j, node_k)$ are reflected by the dashed lined arrows which represent the shortest paths of the respective connection requests. The latter shortest paths are the initial paths connecting the pairs of terminal nodes defined by the matrix of communication requests.

In **Fig. 1b** a second state of execution of the inventive method is shown after the priorities were changed for the first time, i.e. after the weighting values have been adjusted for the first time, when using $p_s = 1$. The values of the new priorities, i.e. the reciprocal values of the new weighting values are shown in the figure as the numbers written in the small boxes neighboring to the links. As the function of the number of initial paths comprising a specific network link the number of paths itself is chosen for the sake of simplicity.

**Fig. 1c** shows the situation after the next iteration step of the inventive method, which is different to the second state shown in figure 1 b. I.e. after the next execution of the algorithm the situation is different, because the shortest path, meaning the path with highest priority which corresponds to the path with the smallest sum of weighting values, for one of the paths has changed. The changed path 15 is shown by a.thicker dashed line. The new priorities for the changed situation are written in the small boxes neighboring to the links.

If no more iterations of the inventive method are executed after the latter step the changed path is the routing path for data traffic between the network nodes connected by this path.

A method for routing data traffic in a network 10 comprising a plurality of nodes 11 and a plurality of network links 12 that extend between adjacent ones of said nodes 11 is provided, wherein the data traffic is resulting from a plurality of communication requests between pairs of said nodes 11 referred to as terminal nodes, the terminal nodes being connected by paths, each path being defined by a set of adjacent network links 12. The method comprising the steps of:

    a) assigning a weighting value to each of said network links 12;
    b) selecting an initial path connecting said pairs of terminal nodes for each communication request;

c) selecting a routing path 15 by the steps of:

ca) determining the initial paths which are comprising a specific network link of said network links;
cb) adjusting the weighting value of said specific network link as a function of the number of said initial paths comprising the specific network link and/or of the load caused by said initial paths on said specific network link;
cc) selecting the routing path 15 as the shortest path connecting the pair of terminal nodes of at least one selected communication request of said communication requests, wherein the length of the network links being part of the routing path 15 is being weighted by its weighting value;

d) routing at least part of said traffic on said routing path 15.

**Claims**

1. A method for routing data traffic in a network (10) comprising a plurality of nodes (11) and a plurality of network links (12) that extend between adjacent ones of said nodes (11), wherein the data traffic is resulting from a plurality of communication requests between pairs of said nodes (11) referred to as terminal nodes, the terminal nodes being connected by paths, each path being defined by a set of adjacent network links (12), comprising the steps of:

a) assigning a weighting value to each of said network links (12);
b) selecting an initial path connecting said pairs of terminal nodes for each communication request;
c) selecting a routing path (15) by the steps of:

ca) determining the initial paths which are comprising a specific network link of said network links;
cb) adjusting the weighting value of said specific network link as a function of the number of said initial paths comprising the specific network link and/or of the load caused by said initial paths on said specific network link,
cc) selecting the routing path (15) as the shortest path connecting the pair of terminal nodes of at least one selected communication request of said communication requests, wherein the length of the network links being part of the routing path (15) is being weighted by its weighting value;

d) routing at least part of said traffic on said routing path (15)

**characterised in that**
in step cb) the weighting value is adjusted by assigning a new weighting value which is a function of the said number of paths comprising the specific network link and/or of the load the said number of paths cause on the specific network link as the weighting value of the specific network link, wherein the new weighting value is calculated in such a way that the sum of the loads said number of paths contribute on the specific link is calculated, an initialization value of the specific network link is added to the sum and the reciprocal value of the sum is assigned as the new weighting value

2. The method according to claim 1, **characterised in that**
the initial paths connecting said pairs of terminal nodes (11) for each communication request are selected as the shortest path connecting the pair of terminal nodes of each communication request, preferably wherein the length of the network links (12) being part of the initial path is being weighted by its weighting value.

3. The method according to claim 1, **characterised in that**
step c) is iterated, wherein in each iteration the routing path of the previous iteration is taken as an initial path of the current iteration, preferably until a predefined number of iteration steps has been executed or until the total number of network links comprised by initial paths has hit a predefined minimum number or until none of the weights of said network links has changed between the previous step of iteration and the current step of iteration.

4. The method according to claim 1, **characterised in that**
step ca) is carried out for each network link of said network links as specific network link and
step c) is carried out for each of said communication requests.

5. The method according to claim 1, **characterised in that**
in step cd) the shortest path is calculated by using the algorithm of Dijkstra.

6. Computer program product comprising means for performing the method of one of the claims 1 to 5 when run and/or stored on a computer system.

**Patentansprüche**

1. Ein Verfahren zum Weiterleiten von Datenverkehr in einem Netzwerk (10) mit einer Vielzahl von Knoten (11) und einer Vielzahl von Netzwerk-Links (12), welche sich zwischen benachbarten der besagten Knoten (11) erstrecken, wobei sich der Datenverkehr aus einer Vielzahl von Kommunikationsanfragen zwischen Paaren der besagten Knoten (11), bezeichnet als Anschlussknoten, ergibt, wobei die Anschlussknoten über Pfade verbunden sind, wobei jeder Pfad von einer Gruppe von benachbarten Netzwerk-Links (12) definiert wird, wobei das Verfahren die folgenden Schritte umfasst:

   a) Zuweisen eines Gewichtungswertes an einen jeden der besagten Netzwerk-Links (12);
   b) Auswählen eines Ursprungspfads, welcher die besagten Paare von Anschlussknoten für jede Kommunikationsanfrage verbindet;
   c) Auswählen eines Weiterleitungspfads (15) durch Ausführen der folgenden Schritte:

   ca) Bestimmen der Ursprungspfade, welche einen spezifischen Netzwerk-Link der besagten Netzwerk-Links umfassen;
   cb) Anpassen des Gewichtungswertes des spezifischen Netzwerk-Links in Abhängigkeit von der Anzahl der besagten Ursprungspfade, welche den spezifischen Netzwerk-Link enthalten, und/oder von der durch die besagten Ursprungspfade auf den besagten spezifischen Netzwerk-Link ausgeübten Belastung;
   cc) Auswählen des Weiterleitungspfads (15) als den kürzesten Pfad, welcher das Paar von Anschlussknoten mindestens einer aus den besagten Kommunikationsanfragen ausgewählten Kommunikationsanfrage verbindet, wobei die Länge der Netzwerk-Links, welche Teil des Weiterleitungspfads (15) sind, anhand des Gewichtungswertes gewichtet werden;

   d) Weiterleiten mindestens eines Teils des besagten Verkehrs auf dem besagten Weiterleitungspfad (15)

   **dadurch gekennzeichnet, dass**
   in Schritt cb) der Gewichtungswert durch Zuweisen eines neuen Gewichtungswertes, welcher von der besagten Anzahl der den spezifischen Netzwerk-Link enthaltenden Pfade und/oder von der Belastung, welche von der besagten Anzahl von Pfaden auf den spezifischen Netzwerk-Link ausgeübt wird, abhängt, als der Gewichtungswert des spezifischen Netzwerk-Links angepasst wird, wobei der neue Gewichtungswert derart kalkuliert wird, dass die Summe der von der besagten Anzahl von Pfaden auf den spezifischen Link ausgeübten Belastungen kalkuliert wird, wobei ein Initialisierungswert des spezifischen Netzwerk-Links zu der Summe addiert wird und der reziproke Wert der Summe als der neue Gewichtungswert zugewiesen wird.

2. Das Verfahren nach Anspruch 1, **dadurch gekennzeichnet, dass**
   die Ursprungspfade, welche die besagten Paare von Anschlussknoten (11) für jede Kommunikationsanfrage verbinden, als der kürzeste Pfad für die Verbindung des Paares von Anschlussknoten einer jeden Kommunikationsanfrage ausgewählt werden, wobei vorzugsweise die Länge der Netzwerk-Links (12), welche Teil des Ursprungspfades sind, anhand ihres Gewichtungswertes gewichtet wird.

3. Das Verfahren nach Anspruch 1, **dadurch gekennzeichnet, dass**
   Schritt c) wiederholt wird, wobei bei jeder Wiederholung der Weiterleitungspfad der vorherigen Wiederholung als ein Ursprungspfad der aktuellen Wiederholung genommen wird, vorzugsweise so oft, bis eine vorher festgelegte Anzahl von Wiederholungsschritten ausgeführt worden ist, oder bis die Gesamtzahl der von den Ursprungspfaden umfassten Netzwerk-Links eine vorher festgelegte Mindestanzahl erreicht hat, oder bis sich keines der Gewichte der besagten Netzwerk-Links zwischen dem vorherigen Wiederholungsschritt und dem aktuellen Wiederholungsschritt verändert hat.

4. Das Verfahren nach Anspruch 1, **dadurch gekennzeichnet, dass**
   Schritt ca) für jeden Netzwerk-Link der besagten Netzwerk-Links als ein spezifischer Netzwerk-Link ausgeführt wird, und
   Schritt c) für eine jede der besagten Kommunikationsanfragen ausgeführt wird.

**5.** Das Verfahren nach Anspruch 1, **dadurch gekennzeichnet, dass**
in Schritt cd) der kürzeste Pfad unter Verwendung eines Dljkstra-Algorithmus kalkuliert wird.

**6.** Computerprogramm-Produkt mit Mitteln zum Ausführen des Verfahrens nach einem der Ansprüche 1 bis 5, wenn es auf einem Computersystem betrieben und/oder gespeichert wird.

**Revendications**

**1.** Procédé de routage d'un trafic de données dans un réseau (10) comprenant une pluralité de noeuds (11) et une pluralité de liaisons de réseau (12) qui s'étendent entre lesdits noeuds (11) voisins, le trafic de données résultant d'une pluralité de demandes de communication entre des paires desdits noeuds (11) appelés noeuds terminaux, les noeuds terminaux étant connectés par des chemins, chaque chemin étant défini par un ensemble de liaisons de réseau (12) voisines, comprenant les étapes suivantes :

a) affectation d'une valeur de pondération à chacune desdites liaisons de réseau (12) ;
b) sélection d'un chemin initial qui connecte lesdites paires de noeuds terminaux pour chaque demande de communication ;
c) sélection d'un chemin de routage (15) par les étapes suivantes :

ca) détermination des chemins initiaux qui comprennent une liaison de réseau spécifique parmi lesdites liaisons de réseau ;
cb) ajustage de la valeur de pondération de ladite liaison de réseau spécifique en fonction du nombre desdits chemins initiaux qui comprennent la liaison de réseau spécifique et / ou de la charge provoquée par lesdits chemins initiaux sur ladite liaison de réseau spécifique ;
cc) sélection du chemin de routage (15) comme étant le chemin le plus court reliant la paire de noeuds terminaux d'au moins une demande de communication sélectionnée parmi lesdites demandes de communication, la longueur des liaisons de réseau faisant partie du chemin de routage (15) étant pondérée par sa valeur de pondération ;

d) routage d'au moins une partie dudit trafic sur ledit chemin de routage (15)

**caractérisé en ce que**
à l'étape cb), la valeur de pondération est ajustée en affectant une nouvelle valeur de pondération, qui est une fonction dudit nombre de chemins comprenant la liaison de réseau spécifique et/ou de la charge provoquée par lesdits chemins initiaux sur ladite liaison de réseau spécifique, en tant que valeur de pondération de la liaison de réseau spécifique, la nouvelle valeur de pondération étant calculée de telle sorte que la somme des charges que ledit nombre de chemins provoque sur la liaison spécifique est calculée, une valeur d'initialisation de la liaison de réseau spécifique est ajoutée à la somme et l'inverse de la somme est affecté en tant que nouvelle valeur de pondération.

**2.** Procédé selon la revendication 1, **caractérisé en ce que**
les chemins initiaux qui relient ladite paire de noeuds terminaux (11) pour chaque demande de communication sont sélectionnés comme étant les chemins les plus courts reliant la paire de noeuds terminaux de chaque demande de communication, la longueur des liaisons de réseau (12) qui fait partie du chemin de routage initial étant de préférence pondérée par sa valeur de pondération.

**3.** Procédé selon la revendication 1, **caractérisé en ce que**
l'étape c) est répétée, le chemin de routage de l'itération précédente étant pris dans chaque itération comme le chemin initial de l'itération courante, de préférence jusqu'à ce qu'un nombre prédéfini d'étapes d'itération ait été exécuté ou jusqu'à ce que le nombre total de liaisons de réseau comprises dans les chemins initiaux ait atteint un nombre minimum prédéfini ou jusqu'à ce qu'aucun des poids desdites liaisons de réseau n'ait changé entre l'étape d'itération précédente et l'étape d'itération courante.

**4.** Procédé selon la revendication 1, **caractérisé en ce que**
l'étape ca) est exécutée pour chaque liaison de réseau parmi lesdites liaisons de réseau en tant que liaison de réseau spécifique et
l'étape c) est exécutée pour chacune desdites demandes de communication.

**5.** Procédé selon la revendication 1, **caractérisé en ce que**
à l'étape cd), le chemin le plus court est calculé en utilisant l'algorithme de Dijkstra.

**6.** Produit de programme informatique comprenant des moyens pour mettre en oeuvre le procédé selon l'une des revendications 1 à 5 lorsqu'il est exécuté et/ou stocké sur un système informatique.

Fig. 1a

Fig. 1b

Fig. 1c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007025853 A1
- EP 1684472 A1